# EUROPEAN PATENT APPLICATION

(11) **EP 3 964 802 A1**
(43) Date of publication of application: **09.03.2022**
(21) Application number: 21189524.8
(22) Date of filing: 03.08.2021
(51) Int. Cl.: G01F 3/22

(54) **A MEASUREMENT UNIT FOR A BELLOWS GAS METER AND A BELLOWS GAS METER**

(30) Priority: 02.09.2020 PL 43516520
(71) Applicant: Apator Metrix Spolka Akcyjna, 83-110 Tczew (PL)
(72) Inventor: Sp awi ski, Pawe, 83-110 Tczew (PL); BARCZY SKI, JERZY WOJCIECH, 83-110 Tczew (PL)
(74) Representative: Wroblewski, Marcin Jan

(57) **Abstract**

A measurement unit (1) for a bellows gas meter comprising a central wheel (2) with a crank (3) connected to a connecting rod (4) of the measurement unit for a gas meter and an assembly of slide valves comprising a pair of slide valves (7) and a rack (9), on which a pair of slide wheels (10) is mounted, which are rotatably coupled with the central wheel (2). The slide wheels (10) are positioned on the longitudinal axis of symmetry of the rack (9). Each slide wheel (10) comprises a pin (11) extending in the direction of its corresponding slide valve (7) comprising at least one track (8) of a cam (12). Each of the pins (11) is in turn positioned coaxially with its corresponding slide wheel (10) and it is fixedly connected thereto. Moreover, each of the pins (11) at its distal end comprises a cam (12) with a cross-section transverse to the axis of rotation of the pin (11) having a contour in the shape of a circle. Each of the pins (11) is rigidly connected to the cam (12) in a point placed on the radius of the cam near its outer edge. Each of the slide valves (7) in turn comprises two parallel tracks (8) with the cam (12) between them, wherein the tracks (8) are positioned perpendicularly to the line along which the slide valves (7) move.

## Description

### Technical field

The object of the invention is a measurement unit for a bellows gas meter with an assembly of slide valves. The object of the invention is also a bellows gas meter.

### Background of the invention

From the American patent application US4856331, there is known a bellows gas meter comprising a cam disk assembly for actuating a valve in order to create a passage between chambers in a cyclical mode. Said assembly comprises a disk cam coupling to a substantially longitudinal opening of a crank assembly, wherein the contour of said disk cam has a shape resembling a triangle, which allows for forming a connection with the motion being stopped. Such a connection speeds up the opening and closing of the slide valves, enabling them to remain in an open and closed position for a relatively long period.

From the British patent application GB281673, there is known a bellows gas meter comprising a vertical shaft with a central cogwheel seated thereon, and at least two additional cogwheels, rotatably coupled therewith. Moreover, said additional cogwheels have bolts extending downwards to allow for their coupling with slide valves of the gas meter. Their length is adjusted so that each of them would be placed below the upper surface of the slide valve and not touch it. Furthermore, each of the slide valves is provided with a recess, whose edge serves the function of the surface of a cam controlling this valve. The bolts rotating in circles with the cogwheels activate the slides by sliding them on the edges of the recesses. The proper shape of said recess in the valve allows for generating the motion of the valve consisting of steps of relatively fast transitions between the end positions, alternately with relatively long breaks in said end positions.

The long stoppages of the slide valves in the end positions have a negative impact on the smoothness of operation of the measurement unit, and thus the gas meter itself.

Therefore, it was desirable to develop such a design of a measurement unit for a gas meter which would allow for minimizing the resting effect of slide valves and ensure even operation of the measurement unit.

### The essence of the invention

The object of the invention is a measurement unit for a bellows gas meter comprising a central wheel with a crank connected to a connecting rod of the measurement unit for a gas meter and an assembly of slide valves comprising a pair of slide valves and a rack, on which a pair of slide wheels is mounted, which are rotatably coupled with the central wheel, wherein the slide wheels are positioned on the longitudinal axis of symmetry of the rack; moreover, each slide wheel comprises a pin extending in the direction of its corresponding slide valve comprising at least one track of a cam, characterised in that each of the pins is positioned coaxially with its corresponding slide wheel and it is fixedly connected thereto; moreover, each of the pins at its distal end comprises a cam with a cross-section transverse to the axis of rotation of the pin having a contour in the shape of a circle; wherein each of the pins is rigidly connected to the cam in a point placed on the radius of the cam near its outer edge, wherein each of the slide valves comprising two parallel tracks with the cam between them, wherein the tracks are positioned perpendicularly to the line along which the slide valves move.

The use of the present design of the measurement unit for a bellows gas meter enables the rotation of the cams around the axis of the pin according to the direction of motion of their corresponding slide wheels. This results in causing a smooth sliding motion of the slide valves, which in turn ensures even operation of said measurement unit.

Preferably, the dimensions of the cams are adjusted to the distance between the tracks.

Preferably, the slide valves are made of a thermosetting material.

Preferably, the slide valves are made of Bakelite.

Furthermore, the object of the invention is a bellows gas meter comprising at least one said measurement unit.

Preferably, the bellows gas meter comprises at least two measurement units, whose central wheels are rotatably coupled by means of at least one additional central wheel.

### Advantages of the invention

The design of the measurement unit for a bellows gas meter according to the invention enables smooth operation of the slide valves, without stopping them in their end positions, or with their stoppage time minimised by as much as possible. The ensured smoothness causes even operation of the measurement unit for a gas meter, as well as proper filling and emptying of the chambers of the measurement unit.

The design of the measurement unit for a bellows gas meter according to the invention also enables maintaining even guidance of the slide valve, and thus maintaining even speed of the slide valve, which results in achieving the lack of turbulent flow (i.e. disrupted flow). Due to this, there are no leaps in pressure losses in the gas meter, and the curve of losses during maximum flow is flatter. Furthermore, the speed of the slide valve, and thus also of the present gas meter, is lower compared to solutions known from prior art.

The solution according to the invention also ensures smaller vibrations occurring during its operation, and quieter operation compared to solutions known from prior art.

The design of the measurement unit for a bellows gas meter according to the invention also allows for reducing losses in the pressure of gas flowing through the gas meter.

The design of the measurement unit for a bellows gas meter according to the invention ensures stability of operation of the gas meter.

The design of the measurement unit for a bellows gas meter according to the invention ensures repeatability of the measurements which it performs.

Moreover, the design of the measurement unit for a bellows gas meter according to the invention allows for reducing hydraulic and mechanical losses generated during operation of the gas meter, and thus it ensures an improvement in its performance.

### Description of the drawings

The object of the invention is shown in examples of implementation in the figures, in which:
Fig. 1 presents the measurement unit for a gas meter according to the invention in an exploded view;

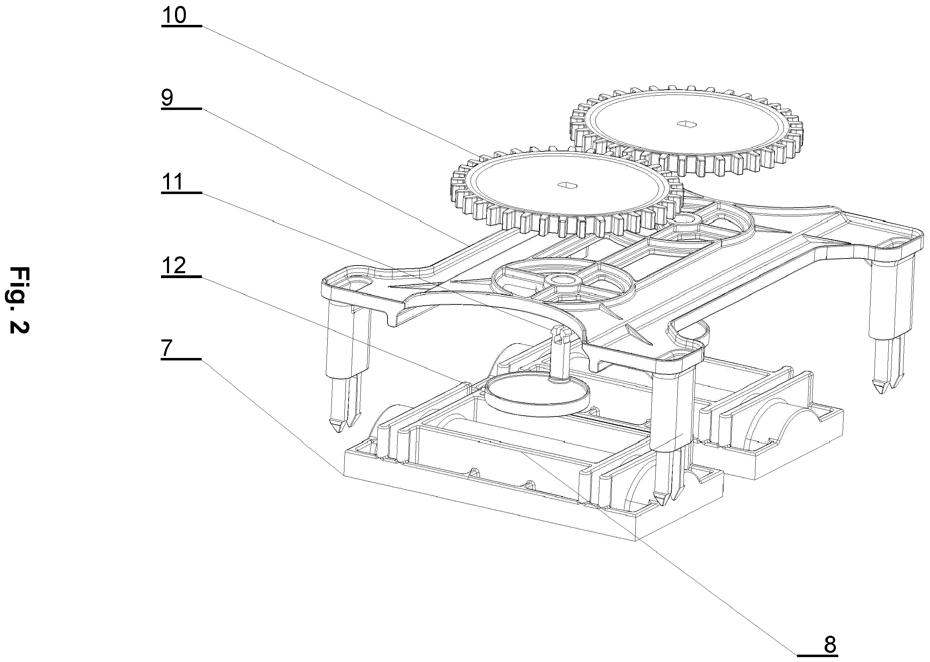

Fig. 2 presents a slide assembly of the measurement unit for a gas meter according to the invention in an exploded view;

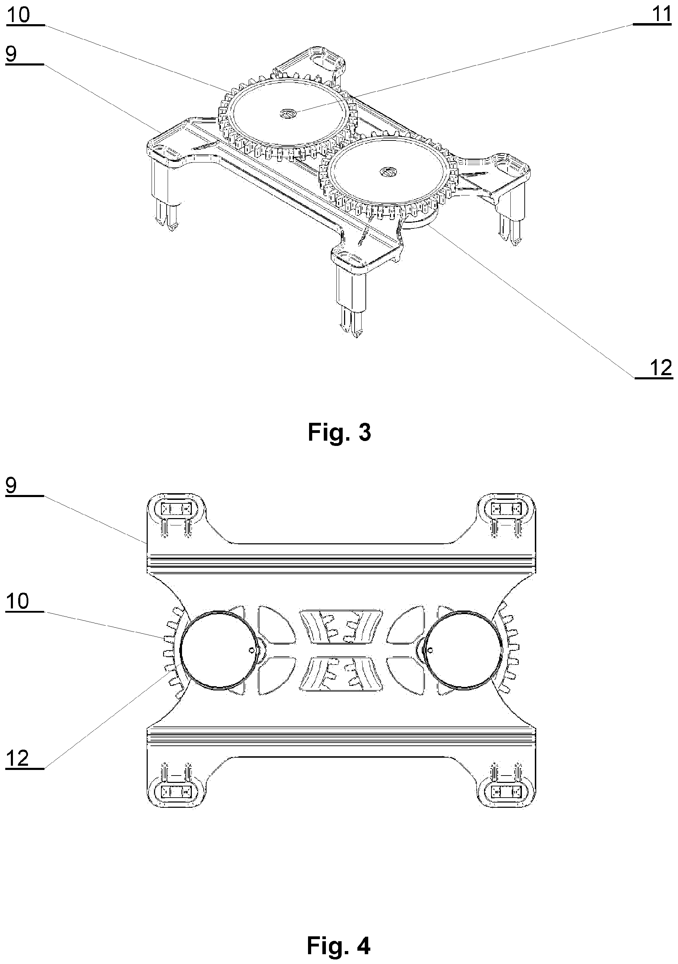

Fig. 3 presents a rack of the slide assembly of the measurement unit for a gas meter according to the invention in a perspective view;
Fig. 4 presents the rack of the slide assembly of the measurement unit for a gas meter according to the invention in a bottom view;
Fig. 5 presents a slide of the slide assembly of the measurement unit for a gas meter according to the invention in a perspective view;
Fig. 6 presents a bellows gas meter comprising the measurement unit for the gas meter according to the invention in a perspective view;

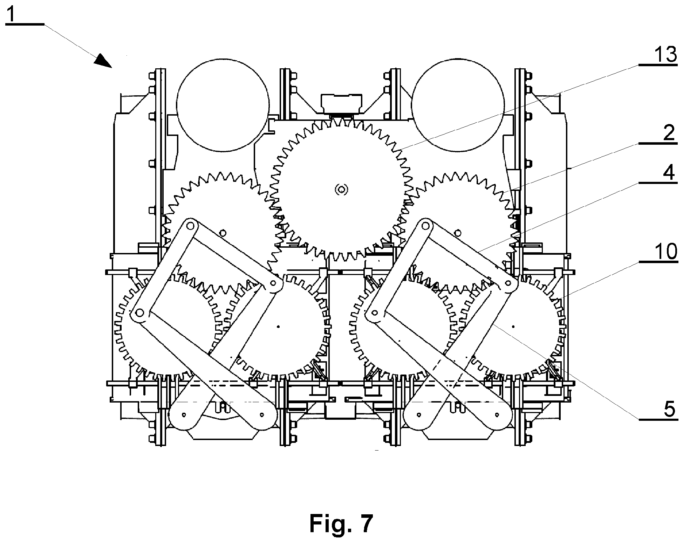

Fig. 7 presents a fragment of the bellows gas meter comprising two measurement units according to the invention in a top view.

### Description of the invention

### The first embodiment

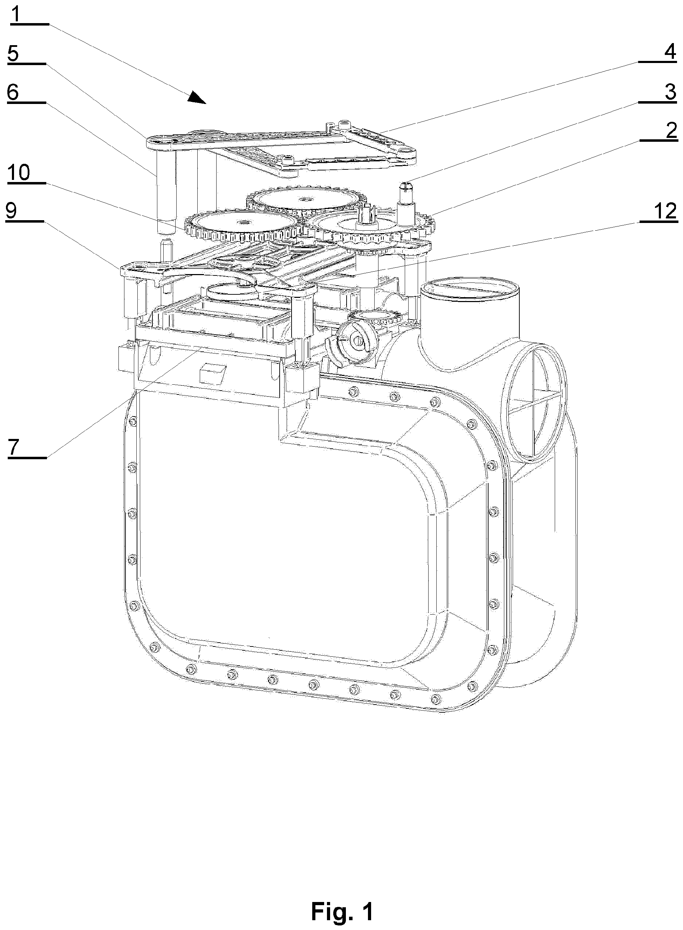

Fig. 1 presents the measurement unit 1 for a bellows gas meter comprising a central wheel 2 with a crank 3 connected to a connecting rod 4. The connecting rod 4 is in turn connected to swinging levers 5, and those to vertical axles 6, which enables transferring the motion from elements inside the measurement unit 1 for a gas meter to its external elements.

Moreover, the measurement unit 1 for a bellows gas meter comprises an assembly of slide valves used to adjust the flow of gas therein. The assembly of slide valves is permanently seated on the body of said measurement unit for a gas meter by means of glue.

Said assembly of slide valves comprises a pair of slide valves 7 made of a thermosetting material - Bakelite.

Each of the slide valves 7 comprises two parallel tracks 8 with a cam 12 between them. The tracks 8 are arranged on the upper surface of the slide valves 7, perpendicularly to the lines along which said valves move. Moreover, the assembly of slide valves comprises a rack 9, on which a pair of slide wheels 10 is mounted, which are positioned on the longitudinal axis of symmetry of the rack 9. Each slide wheel 10 comprises a pin 11, which extends in the direction of its corresponding slide valve 7. Each of the pins 11 is positioned coaxially with its corresponding slide wheel 10, and it is fixedly connected thereto. Moreover, each of the pins 11 at its distal end comprises a cam 12 with a cross-section transverse to its axis of rotation having a contour in the shape of a circle, and it is connected to the cam 12 rigidly in a point placed on the radius of the cam near its outer edge.

The slide wheels 10 are rotatably coupled with the central wheel 2, which allows for transferring the propulsion to the assembly of slide valves. Furthermore, the cams 12 constitute propulsion for the slide valves 7 and cooperate with their tracks 8. The dimensions of the cams 12 are adjusted to the distance between the tracks 8.

The described design of the measurement unit 1 for a bellows gas meter allows for rotation of the cams 12 around the axis of the pin 11 according to the direction of motion of their corresponding slide wheels 10, which causes smooth sliding motion of the slide valves 7.

### The second embodiment

A bellows gas meter comprising a measurement unit 1 like in the first embodiment.

### The third embodiment

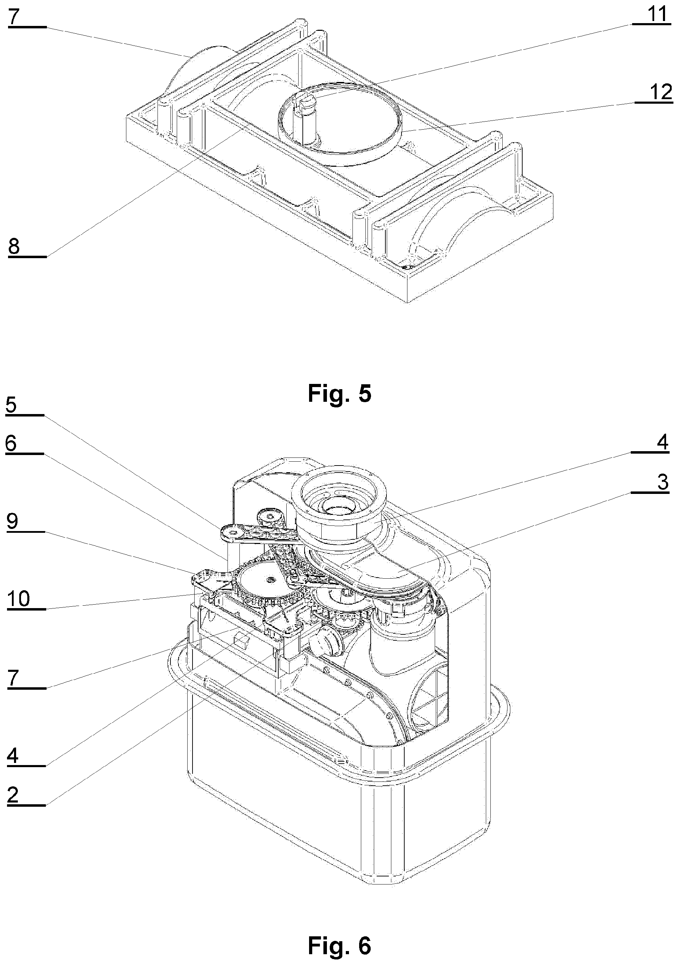

Fig. 6 presents a fragment of a bellows gas meter comprising two measurement units 1 like in the first embodiment, whose central wheels are rotatably coupled by means of an additional central wheel 13.

## Claims

1. A measurement unit (1) for a bellows gas meter comprising a central wheel (2) with a crank (3) connected to a connecting rod (4) of the measurement unit for a gas meter and an assembly of slide valves comprising a pair of slide valves (7) and a rack (9), on which a pair of slide wheels (10) is mounted, which are rotatably coupled with the central wheel (2), wherein the slide wheels (10) are positioned on the longitudinal axis of symmetry of the rack (9); moreover, each slide wheel (10) comprises a pin (11) extending in the direction of its corresponding slide valve (7) comprising at least one track (8) of a cam (12), **characterised in that** each of the pins (11) is positioned coaxially with its corresponding slide wheel (10) and it is fixedly connected thereto; moreover, each of the pins (11) at its distal end comprises a cam (12) with a cross-section transverse to the axis of rotation of the pin (11) having a contour in the shape of a circle; wherein each of the pins (11) is rigidly connected to the cam (12) in a point placed on the radius of the cam near its outer edge, wherein each of the slide valves (7) comprising two parallel tracks (8) with the cam (12) between them, wherein the tracks (8) are positioned perpendicularly to the line along which the slide valves (7) move.

2. The measurement unit according to claim 1, **characterised in that** the dimensions of the cams (12) are adjusted to the distance between the tracks (8).

3. The measurement unit according to claim 1 or 2, **characterised in that** the slide valves are made of a thermosetting material.

4. The measurement unit according to claim 3, **characterised in that** the slide valves are made of Bakelite.

5. A bellows gas meter comprising at least one measurement unit (1) according to any of the claims from 1 to 4.

6. The bellows gas meter according to claim 5, **characterised in that** it comprises at least two measurement units, whose central wheels are rotatably coupled by means of at least one additional central wheel (13).
